Europäisches Patentamt

European Patent Office

Office européen des brevets

(19)

(11) **EP 1 149 680 B1**

(12) **EUROPEAN PATENT SPECIFICATION**

(45) Date of publication and mention
of the grant of the patent:
**17.12.2003 Bulletin 2003/51**

(51) Int Cl.⁷: **B29C 44/56**, B29C 44/26,
B29C 44/08, B29C 44/34

(21) Application number: **00109272.5**

(22) Date of filing: **28.04.2000**

(54) **Method for producing a low density, flexible thermoplastic foam, and foam thus produced**

Verfahren zur Herstellung eines flexiblen thermoplastischen Schaumstoffes mit niedriger Dichte und derart hergestellter Schaum

Procédé de préparation de mousses thermoplastiques flexibles de faible densité, et mousse ainsi fabriquée

(84) Designated Contracting States:
**CH DE ES GB IT LI**

(43) Date of publication of application:
**31.10.2001 Bulletin 2001/44**

(73) Proprietor: **Armacell Enterprise GmbH**
**48153 Münster (DE)**

(72) Inventors:
• **Kreiser, David W.**
**Marietta, Pennsylvania 17547 (US)**
• **Dinkel, Allan L.**
**Lancaster, Pennsylvania 17512 (US)**

• **Weibel, Juerg Patrik**
**Lancaster, Pennsylvania 17601 (US)**

(74) Representative: **Finck, Dieter, Dr.Ing. et al**
**v. Füner Ebbinghaus Finck Hano**
**Mariahilfplatz 2 - 3**
**81541 München (DE)**

(56) References cited:
**WO-A-97/28942         US-A- 5 955 014**

• **PATENT ABSTRACTS OF JAPAN vol. 1995, no. 03, 28 April 1995 (1995-04-28) & JP 06 344457 A (FURUKAWA ELECTRIC CO LTD:THE), 20 December 1994 (1994-12-20)**

## Description

The invention relates to a method of treating an amorphous or semicrystalline thermoplastic polymer foam to lower its initial density and to increase its flexibility.

Thermoplastic materials are those that soften and flow upon application of pressure and heat. Thermoplastic foams are defined, generally, as foams made from thermoplastic resins. Because thermoplastic materials regain their original properties upon cooling, most thermoplastic materials can be remolded many times. Examples of thermoplastic resins include poly(vinyl chloride), polyethylene polystyrene, acrylate resins, and poly(ethylene terephthalate).

It is known to produce thermoplastic resin foam materials having substantially closed-cell structures by intimately incorporating within the resin material a volatile organic liquid which vaporizes upon heating to form a gas (the liquid is known as the blowing agent, its resultant vapor the blowing gas). It is also known to use a solid substance as the blowing agent where the solid substance decomposes to form the blowing gas. The vapor created from the blowing agent is the blowing gas (often also referred to as simply the blowing agent) and causes the thermoplastic to expand and form a cellular mass.

Thermoplastic resin materials that have been foamed by the action of a volatile organic blowing agent producing a primary foaming gas may thereafter be induced to further expand. This secondary expansion is achieved by exposing the foamed material to another gas (a secondary gas), such as steam or air, which has a permeability rate greater than the permeability rate of the primary foaming gas through the cell walls of the foamed mass. During the exposure to this secondary gas, the material is reheated to a heat softening temperature. The secondary gas, which has a permeability rate through the cell wall greater than that of the primary gas already in the cell, permeates the cell wall and joins the primary gas inside the cell. At the heat softening temperature, the combined effect of the primary gas and the secondary gas causes further expansion of the initially foamed material. The result is a lower density foam product.

It is further known that thermoplastic resin materials that have been foamed by the gas emitted upon decomposition of a solid substance may thereafter be induced to further expand. This further expansion is achieved by heating the foamed material to a temperature near the melting point of the resin while subjecting it to a secondary gas at superatmospheric pressure. After this step is performed, the foamed material is reheated to a heat softening temperature at a lower pressure (i.e. atmospheric pressure). This causes the gas to expand inside the cells. The combined expansion of the primary gas and the secondary gas (which has entered the cells of the foamed material primarily because of the internal/external pressure differential during the application of the superatmospheric pressure) produces a lower density foam product.

U.S. 5,955,014 discloses a process for manufacturing a foamed plastic film, wherein a pre-foamed plastic film is pressurized with gas under positive pressure of approximately 1Pa causing a gas to defuse into the film to form a pressurized plastic film being pre-foamed into a degree of foaming of about 30%. Thereafter, the pressurized plastic film is inflated by heating the film at a temperature below the melting point of the film and under a negative, i.e. subatmospheric pressure. This results in forming an inflated foam film with a foaming degree up to 80%.

WO 97/28942 discloses a method for producing open containers from a flat sheeting consisting of a foam material by using a male and a female tool. The drawing process comprises a drawing step using a pressure difference the two sides of the sheeting, assisted by the drawing procedure of the tools, whereupon the foam can expand by applying a vacuum which is maintained until the sheeting is cooled sufficiently to mold the open container produced from the sheeting.

The object of the invention is to provide a method of treating an amorphous or semicrystalline thermoplastic polymer foam to increase its flexibility and to lower its density up to about 96% of its initial density such as to obtain foams with densities as low as 0.008 g/cm$^3$.

This object is achieved with the method of claim 1, which is further embodied by the measures of subclaims 2 to 6.

The invention involves a multi-step process. The first step calls for decreasing the pressure on a primarily foamed thermoplastic resin and, while the foam is subject to this decreased pressure (under at least a partial vacuum), increasing the temperature of the foam. The foam temperature is increased to a point between the glass transition temperature and about the melting point of the foam, if the resin is made from a semicrystalline resin. If the resin is amorphous, the temperature is raised to a point between the softening temperature and the melting point of the amorphous foam. While these temperature and pressure conditions are sustained, the foam expands. The foam expansion is the result of the cells in the foam undergoing an increase in volume due to the temperature increase and pressure decrease. The order in which the temperature and pressure are changed is irrelevant - they may even be adjusted simultaneously. Furthermore, if the foam is taken directly from a foam extrusion process, the foam may already be at the proper temperature. In fact, from the foam extrusion process, the temperature may even have to be lowered before allowing the first step to occur. The conditions reached in the first step are held for a predetermined time, to allow adequate foam expansion, before moving to the second step.

The second step involves exposing the primarily foamed (and expanded) thermoplastic resin foam to a secondary expansion gas for a sufficient amount of time to cause secondary expansion. Secondary expansion occurs when the secondary gas permeates the cells of the thermoplastic resin and joins the primary blowing agent inside each cell. The pressure under which the foam is subject during this second step is preferably at least about 1 pascal (Pa) above atmospheric pressure. For a faster permeation rate and subsequent expansion, the pressure should be at least about 500 kilopascals (kPa) above atmospheric pressure. When the pressure is released, the foam will expand again, thereby lowering its density.

In this second step, it is preferred that the temperature is in the same range as that used in the first step. Although it is possible to perform the second step at temperatures up to the melting point and down to ambient temperatures, the process would, in the latter case, be unsuitably long. The temperature can be maintained from the first step, or the material can be cooled and later reheated. In addition, the temperature can be increased before, during, or after the pressure is adjusted. After the gas permeates the foam cells during the second step, the pressure is released and expansion occurs. The foam can be cooled before, during, or after the pressure is released. Preferably, the foam will be cooled after pressure is released and expansion is allowed to occur.

The density reduction achieved by this process can be up to 96%.

The invention is best understood from the following detailed description when read in connection with the following drawing, in which

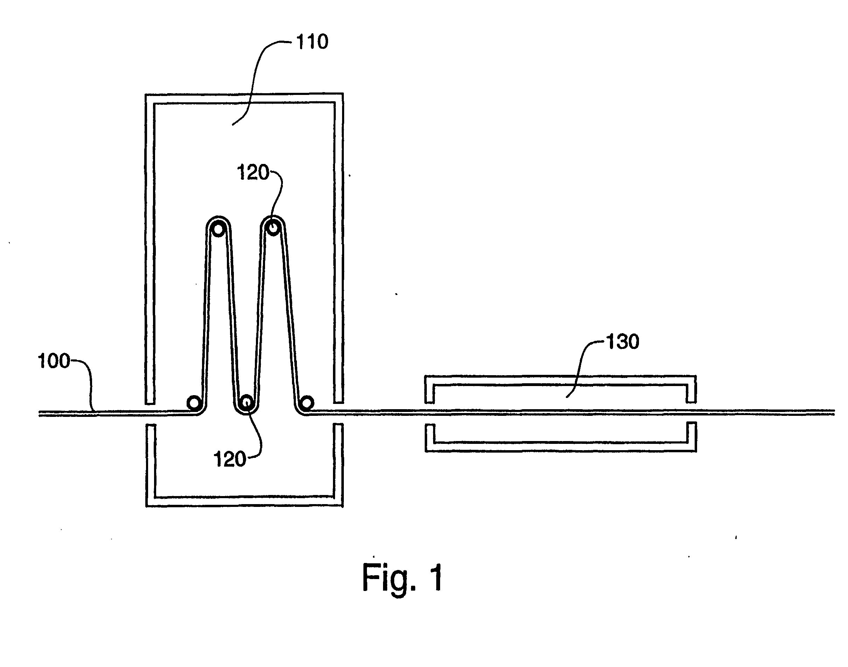

FIG. 1 is a block diagram that schematically illustrates a continuous operation for carrying out the steps according to the present invention.

The present invention is an improved, low density thermoplastic foam and an improved method for treating thermoplastic foams to achieve foams of lower density and increased flexibility. The invention involves a two-step process. The first step involves increasing the temperature of a primarily foamed thermoplastic resin to a first temperature which is between the glass transition temperature of the foamed thermoplastic resin and the melting temperature of the foamed thermoplastic resin if the resin is semicrystalline, and between the softening temperature and melting temperature if the resin is amorphous. While this first temperature is maintained, the pressure acting on the primarily foamed thermoplastic resin is reduced to a subatmospheric pressure. The order in which the temperature and pressure are changed is irrelevant, and they may be adjusted simultaneously. The conditions reached in the first step are then held for a predetermined time before moving to the second step.

The second step involves exposing the primarily foamed thermoplastic resin to a secondary expansion gas. During this exposure, the pressure is increased to a superatmospheric pressure, and the foam temperature can go from ambient up to the melting point. Although the high temperatures do not have to be used in this step, the cooler the foam is kept, the slower the permeation rate of gas into the cells. This exposure to elevated temperature and pressure is allowed to occur for a sufficient amount of time to cause the secondary expansion gas to permeate into the cells of the thermoplastic resin. Preferably, the pressure is released from the foam before the temperature is allowed to drop, although the order in which these variables are allowed to drop is not critical to achieving the density decreases.

The first step discussed above involves, effectively, a pretreatment of the primarily foamed thermoplastic resin material, prior to conducting the secondary blowing. The elevated temperature during the pretreatment acts in two ways to increase the size of the cells of the material. The temperature increase causes an expansion of the primary blowing gas which is already in the cells. The elevated temperature also affects the material walls, softening the material and allowing it to expand more easily. Thus, the temperature is chosen so that the primarily foamed material is soft enough to further expand, yet is not so soft that the existing cell structure collapses or the cell walls tear. Typical temperatures used during this pretreatment step range from about 80°C to about 120°C for poly(ethylene terephthalate), and from about 25°C to about 60°C for polyethylene. Moreover, the temperature is selected based on the particular polymer being treated. The temperature should be between the glass transition temperature and the melting temperature of the polymer comprising the semicrystalline resin material, and between the softening temperature and melting temperature of the polymer if it is amorphous.

The temperature, although selected with the above considerations in mind, is also dependent on the amount of vacuum pulled and the type of polymer which comprises the material. Thus, there is an interdependence between the vacuum pulled and the temperature of the system during which the subatmospheric pressure is applied. The subatmospheric pressure must be adequate to cause the expansion of the cell, in conjunction with the temperature elevation. The pressure may be reduced to any point less than atmospheric. The pressure can be reduced as far as technically possible. Pressures can, thus, go as low as 1 Pa. The pressure is generally reduced to at least 5 Pa below atmospheric, and preferably to at least 100 kPa below atmospheric. Thus, the pressure reduction will range from 0 gauge down to about -100 kPa gauge, and preferably it is from about -5 Pa gauge to about -96 kPa gauge. The 0 gauge level is atmospheric pressure and can be achieved when the foam is cool and only needs to be heated to be brought into the correct temperature range for necessary expansion.

In some cases, depending on the polymer, lowering the pressure during the first step is not even necessary. Where only a small amount of increase in volume is desired in order to obtain the necessary stretching, merely increasing the temperature can work if the temperature was not already in the desired range. In an exemplary embodiment, both a temperature increase and a pressure decrease are effected on the material. This combination provides a substantial density decrease.

After the first step is complete, the material often appears deflated. This is because the cells have been effectively stretched during the first step. When the pressure on the material is returned to atmospheric pressure, the material appears crushed. At this point, the material is ready to be secondarily blown.

In this second step, the material is subjected to an increased temperature and pressure while being exposed to the secondary blowing agent. Any superatmospheric pressure can be used. The pressure can go from as little as 1 Pa up to the technical limit of pressure vessels used - up to about 10,000 atmospheres. At the lower levels of 1-10 Pa, however, the step will proceed undesirably slowly. Therefore, the pressure should be up to a level in the range of from about 500 kPa to about 10,000 kPa. A range from as little as 100 Pa over atmospheric pressure to about 1000 kPa is a preferred pressure range for the superatmospheric pressure of the second step.

The secondary blowing agent, then, under pressure, permeates the cell walls and joins any remaining primary blowing agent inside each cell. Generally, the higher the pressure and temperature, the faster the secondary expanding agent will impregnate the cells. Permeation modifiers such as glycerol monosterate or fatty acids will also have an effect on the permeation rate. Generally, any appropriate gas may be used as the secondary blowing agent. Typical gases include carbon dioxide, air, nitrogen, argon, fluorocarbons, hydrochlorofluorocarbons, and hydrocarbon gases. These and like gases can be used alone or in combination. When the higher pressure is released, the cells reinflate and expand beyond their original volume. The lower density and higher flexibility is thereby achieved, and the material is dimensionally stable. It can now be further processed by molding, forming, etc. if desired.

The invention can be practiced in several different manufacturing techniques, including both batch and continuous operations. FIG. 1 illustrates, schematically, an example of a continuous operation. A primarily foamed resin sheet 100 is transported to a chamber 110 wherein it is exposed to reduced pressure and increased temperature by passing sheet 100 around rollers 120 configured so as to give sheet 100 a deviated route within chamber 110. The length of the deviated route around rollers 120, the number of rollers 120, and the rate of transport will provide the appropriate residence time for sheet 100. The residence time requirements are determined based on the amount of expansion desired prior to the secondary blowing, as discussed above. Sheet 100 can then be transported, optionally through a second series of rollers (not shown), to a second chamber 130 wherein secondary blowing is allowed to occur. When the foam being used is taken directly from an extruder, it might already be at the desired temperature. In such a case, the pressure alone needs to be adjusted.

The process may, alternatively, be carried out in a batch operation. In such a case, the primarily foamed material to be treated is placed into a first chamber wherein pressure is reduced and temperature is increased. After expansion is allowed to occur, the material is removed and placed into a second chamber where the secondary blowing is effected. Alternatively, the same chamber may be used for both steps, wherein the temperature and pressure conditions are manipulated at different times to effect both steps during the overall residence time.

Suitable resins include any thermoplastic material. Preferred materials include polystyrene polymers (amorphous) such as copoly(styrene-acrylonitrile), olefinic polymers (semicrystalline) such as polyethylene, polycarbonate polymers, and polyester polymers (semicrystalline) such as poly(ethylene terephthalate). The thermoplastic foams of the present invention, although made from these polymers, may also include additives to enhance the overall desirability of the foam. One such additive would add fire retardant characteristics to the foam. Other additives could also be added, such as to affect the color of the final product.

The primarily foamed material which is the starting point for the present invention may be of any size or shape. Sheet material is preferred if a continuous operation is going to be used. In addition, sheet material can later be formed to the desired shape after density reduction has been achieved. The primarily foamed material is substantially amorphous in nature at the time of the vacuum expansion. Materials that are predominately crystalline at the time of vacuum expansion do not sufficiently achieve the low densities embodied in the present invention. In an exemplary embodiment, the primarily foamed material is substantially closed cell so that the cells can be pressurized by the secondary expanding agent. The primarily foamed material in this embodiment also has a substantial portion of the primary foaming agent retained in the cells.

The thermoplastic polymer foams of this invention are particularly well suited for use as thermal insulators. The thermal-conductivity of thermoplastic foams ($\lambda$) is generally comprised of the thermal-conductivity of the solid phase ($\lambda_s$), the gas phase ($\lambda_g$), the convective ($\lambda_c$), and the radiative ($\lambda_r$) components:

$$\lambda = \lambda_s + \lambda_g + \lambda_c + \lambda_r$$

Conduction through the thermoplastic foam material itself (the cell wall material) amounts to about 25% of the total energy transfer, and conduction through the gas within the cells amounts to about 50% of the total energy transfer. The effect of natural convection within the cell walls is a function of the cell dimension. The overall effect of cell gas convection energy transfer on total insulation characteristics is, however, considered to be small for all but very low density foams having very large cell size. The final cell size of the present invention will depend on the original cell size of the primarily blown material. This can be varied in a large range from very small to very large.

In order to reduce the thermal conductivity of the polymeric foam it is necessary to minimize all of the above factors. Reducing the foam density, therefore, helps to lower the thermal conductivity. Additional benefits to using the low density foams of the present invention are economic. Because there is less material cost, the insulations are cheaper to manufacture, yet perform better than insulators made with foams of higher density. Transport costs are decreased because of diminished weight. Construction costs are decreased because the insulation is easier to handle. Insulations made with the present invention would include all types, especially tube or sheet insulations for pipe and ductwork.

The following examples provide detailed information on several foams made according to the present invention.

EXAMPLES

Example 1

A sample of a primarily foamed poly(ethylene terephthalate) material was placed into a vessel at 116°C and -100 kPa for 5 minutes. The density of the material before being placed into the vessel was approximately 0.16 grams per cubic centimeter. The vacuum was released and the foam sample was placed into a temperature controlled, pressure vessel containing carbon dioxide at 180°C and 689 kPa for 4 hours. The pressure was then released from the vessel and the carbon dioxide was allowed to escape. The density of the sample after the secondary expansion, measured by water immersion, was approximately 0.0080 $g/cm^3$. The secondarily expanded sample was also much more flexible than it was in its primarily expanded state.

The nearly same experiment was also run without the vacuum step. A similar sample of poly(ethylene terephthalate) material having a density of 0.16 $g/cm^3$ was placed into a pressure vessel containing carbon dioxide at 180°C and 689 kPa for 4 hours. The final density of the sample was 0.15 $g/cm^3$.

Example 2

A sample of a primarily foamed, low density poly(ethylene) tube was placed into a vessel at 35°C and -68 kPa for 3 minutes. The density of the material before being placed into the vessel was approximately 0.024 $g/cm^3$ centimeter. The vacuum was released and the foamed tube was placed into a temperature controlled, pressure vessel containing carbon dioxide at 32°C and 689 kPa for 14 hours. The pressure was then released from the vessel and the carbon dioxide was allowed to escape. The density of the sample after the secondary expansion, measured by water immersion, was approximately 0.019 $g/cm^3$.

The nearly same experiment was also run without the vacuum step. A similar sample of low density poly (ethylene) tube having a density of 0.024 $g/cm^3$ was placed into a pressure vessel containing carbon dioxide at 32°C and 689 kPa for 14 hours. The final density of the sample was 0.024 $g/cm^3$

Example 3

A sample of a primarily foamed poly(ethylene terephthalate) material was placed into a vessel at 116°C and -80 kPa for 5 minutes. The density of the material before being placed into the vessel was approximately 0.16 $g/cm^3$. The vacuum was released and the foam sample was placed into a temperature controlled, pressure vessel containing air at 180°C and 838 kPa for 1 hour. The pressure was then released from the vessel and the air was allowed to escape. The density of the sample after the secondary expansion, measured by water immersion, was approximately 0.016 $g/cm^3$. The secondarily expanded sample was also much more flexible than it was in its primarily expanded state.

The nearly same experiment was also run without the vacuum step. A similar sample of poly(ethylene terephthalate) material having a density of 0.16 $g/cm^3$ per cubic centimeter was placed into a pressure vessel containing air at 180°C and 838 kPa for 1 hour. The final density of the sample was 0.21 $g/cm^3$

Example 4

A sample of a primarily foamed poly(ethylene terephthalate) material was placed into a vessel at 80°C and -100 kPa for 5 minutes. The density of the material before being placed into the vessel was approximately 0.16 g/cm$^3$ centimeter. The vacuum was released and the foam sample was placed into a temperature controlled, pressure vessel containing carbon dioxide at 180°C and 138 kPa for 4 hours. The pressure was then released from the vessel and the air was allowed to escape. The density of the sample after the secondary expansion, measured by water immersion, was approximately 0.048 g/cm$^3$. The secondarily expanded sample was also much more flexible than it was in its primarily expanded state.

The nearly same experiment was also run without the vacuum step. A similar sample of poly(ethylene terephthalate) material having a density of 0.16 g/cm$^3$ was placed into a pressure vessel containing carbon dioxide at 180°C and 138 kPa for 4 hours. The final density of the sample was 0.13 g/cm$^3$.

The following table summarizes the results of the above examples and also shows the percent change in density in each case.

TABLE

| Example | Starting δ (g/cm$^3$) | Final δ with<u>out</u> Vacuum Step (g/cm$^2$) (% decrease) | Final δ <u>with</u> Vacuum Step (g/cm$^3$) (% decrease) |
|---|---|---|---|
| 1 | 0.16 | 0.15 (6.3%) | 0.0080 (95.0%) |
| 2 | 0.024 | 0.024 (0%) | 0.019 (20.8 %) |
| 3 | 0.16 | 0.21 (-31.3%) | 0.016 (90%) |
| 4 | 0.16 | 0.13 (18.8%) | 0.048 (70.0%) |

As seen from the above, in each case where the material was processed in accordance with the present invention, large decreases in density are seen and range from approximately 20 % to 95 %. In cases where the material was exposed only to secondary blowing, small decreases were seen, ranging from no change to approximately 19%. In one case, an increase in density was seen. These data show the effectiveness of pretreating the material with the vacuum step.

**Claims**

1. Method of treating an amorphous or semicrystalline thermoplastic polymer foam to lower its initial density and to increase its flexibility,

   - wherein the pressure on the foam is decreased to a subatmospheric pressure, while the temperature of the foam is adjusted to a temperature in a range of less than the melting temperature of the foam and greater than the softening temperature of the amorphous foam or greater than the glass transition temperature of the semicrystalline foam, whereby the foam expands,
   - then the foam is exposed to a superatmospheric pressure and to a secondary expansion gas for a sufficient amount of time to allow the secondary expansion gas to permeate into the foam and
   - the superatmospheric pressure is released to expand the foam.

2. Method according to claim 1, **characterized in that** the subatmospheric pressure is held between -5 kPa and -96 kPa gauge.

3. Method according to claim 1 or 2, **characterized in that** the superatmospheric pressure is held in a range from 1 Pa to 1000 kPa over atmospheric pressure.

4. Method according to one of the preceding claims, **characterized in that** the temperature, when releasing the superatmospheric pressure and/or exposing the foam to the superatmospheric pressure and the secondary gas, is held in a range of less than the melting temperature of the foam and greater than the softening temperature of the amorphous foam or the glass transition temperature of the semicrystalline foam.

5. Method according to one of the preceding claims, **characterized in that** the secondary expansion gas is selected from the group consisting of carbon dioxide, air, nitrogen, argon, a fluorocarbon, a hydrochlorofluorocarbon, a hydrocarbon, and mixtures thereof.

**6.** Method according to one of the preceding claims, **characterized in that** the foam is selected from the group consisting of a polethylene terephthalate, a polystyrene and a polyolefin.

**Patentansprüche**

**1.** Verfahren zur Behandlung eines amorphen oder halbkristallinen thermoplastischen Polymerschaums zur Verringerung seiner Anfangsdichte und zur Erhöhung seiner Flexibilität, bei welchem

- der Druck auf den Schaum auf einen unteratmosphärischen Druck gesenkt wird, während die Temperatur des Schaums auf eine Temperatur in einem Bereich kleiner als die Schmelztemperatur des Schaums und größer als die Erweichungstemperatur des amorphen Schaums oder größer als die Glasübergangstemperatur des halbkristallinen Schaums eingestellt wird, wodurch der Schaum expandiert,
- der Schaum dann einem überatmosphärischen Druck und einem sekundären Expansionsgas über einen Zeitraum ausgesetzt wird, der ausreicht, dass das sekundäre Expansionsgas in den Schaum eindringen kann, und
- der überatmosphärische Druck zum Expandieren des Schaums aufgehoben wird.

**2.** Verfahren nach Anspruch 1, **dadurch gekennzeichnet, dass** der unteratmosphärische Druck zwischen -5 kPa und -96 kPa Manometerdruck gehalten wird.

**3.** Verfahren nach Anspruch 1 oder 2, **dadurch gekennzeichnet, dass** der überatmosphärische Druck in einem Bereich von 1 Pa bis 1000 kPa über dem Atmosphärendruck gehalten wird.

**4.** Verfahren nach einem der vorhergehenden Ansprüche, **dadurch gekennzeichnet, dass** die Temperatur, wenn der überatmosphärische Druck aufgehoben und/oder der Schaum dem überatmosphärischen Druck und dem sekundären Gas ausgesetzt wird, in einem Bereich kleiner als die Schmelztemperatur des Schaums und größer als die Erweichungstemperatur des amorphen Schaums oder die Glasübergangstemperatur des halbkristallinen Schaums gehalten wird.

**5.** Verfahren nach einem der vorhergehenden Ansprüche, **dadurch gekennzeichnet, dass** das sekundäre Expansionsgas aus der Gruppe ausgewählt wird, die aus Kohlendioxid, Luft, Stickstoff, Argon, einem Fluorkohlenstoff, einem Chlorfluorkohlenwasserstoff, einem Kohlenwasserstoff und Mischungen davon besteht.

**6.** Verfahren nach einem der vorhergehenden Ansprüche, **dadurch gekennzeichnet, dass** der Schaum aus der Gruppe ausgewählt wird, die aus einem Polyethylenterephthalat, einem Polystyrol und einem Polyolefin besteht.

**Revendications**

**1.** Procédé de traitement d'une mousse polymère thermoplastique amorphe ou semi-cristalline dans le but de diminuer sa densité initiale et d'augmenter sa flexibilité,

- dans lequel on diminue la pression s'exerçant sur la mousse jusqu'à atteindre une pression subatmosphérique, tandis que l'on règle la température de la mousse à une température dans la plage d'une température inférieure à la température de fusion de la mousse à une température supérieure à la température de ramollissement de la mousse amorphe ou à une température supérieure à la température de transition vitreuse de la mousse semi-cristalline, si bien que la mousse est soumise à une expansion,
- on expose ensuite la mousse à une pression super-atmosphérique et à un gaz d'expansion secondaire pendant un laps de temps suffisant pour permettre au gaz d'expansion secondaire de pénétrer dans la mousse par perméation, et
- on relâche la pression super-atmosphérique pour soumettre la mousse à une expansion.

**2.** Procédé selon la revendication 1, **caractérisé en ce que** la pression subatmosphérique est maintenue dans une échelle de -5 kPa à -96 kPa.

**3.** Procédé selon la revendication 1 ou 2, **caractérisé en ce que** la pression superatmosphérique est maintenue dans une plage de 1 Pa à 1000 kPa au-delà de la pression atmosphérique.

4. Procédé selon l'une quelconque des revendications précédentes, **caractérisé en ce qu'**on maintient la température, lorsqu'on relâche la pression super-atmosphérique et/ou lorsqu'on expose la mousse à la pression super-atmosphérique et au gaz secondaire, dans une plage d'une température inférieure à la température de fusion de la mousse et d'une température supérieure à la température de ramollissement de la mousse amorphe ou d'une température supérieure à la température de transition vitreuse de la mousse semi-cristalline.

5. Procédé selon l'une quelconque des revendications précédentes, **caractérisé en ce que** le gaz d'expansion secondaire est choisi parmi le groupe comprenant le dioxyde de carbone, l'air, l'azote, l'argon, un fluorocarbone, un hydrochlorofluorocarbone, un hydrocarbone et leurs mélanges.

6. Procédé selon l'une quelconque des revendications précédentes, **caractérisé en ce que** la mousse est choisie parmi le groupe comprenant du polyéthylène téréphtalate, du polystyrène et de la polyoléfine.

Fig. 1

EP 1 149 680 B1